# EUROPEAN PATENT SPECIFICATION

(11) **EP 2 592 792 B1**
(45) Date of publication and mention of the grant of the patent: **27.09.2017**
(21) Application number: 10856565.6
(22) Date of filing: 30.08.2010
(51) Int. Cl.: G06F 9/32

(54) **INSTRUCTION PROCESSING METHOD OF NETWORK PROCESSOR AND NETWORK PROCESSOR**
VERFAHREN ZUR VERARBEITUNG VON ANWEISUNGEN FÜR EINEN NETZWERKPROZESSOR UND NETZWERKPROZESSOR
PROCÉDÉ DE TRAITEMENT D'INSTRUCTIONS DE PROCESSEUR DE RÉSEAU ET PROCESSEUR DE RÉSEAU

(43) Date of publication of application: 15.05.2013
(73) Proprietor: Huawei Technologies Co., Ltd., Shenzhen, Guangdong 518129 (CN)
(72) Inventor: YIN, Gaosong, Shenzhen Guangdong 518129 (CN); HAN, Bing, Shenzhen Guangdong 518129 (CN)
(74) Representative: Goddar, Heinz J.
(86) International application number: PCT/CN2010/076458
(87) International publication number: WO 2012/027878

(56) References cited:
- CN-A- 1 885 822
- CN-A- 101 512 482
- US-A1- 2002 144 099
- US-B1- 6 851 046

## Description

### FIELD OF THE INVENTION

The present invention relates to the field of network processors, and in particular, to an instruction processing method of a network processor and a network processor.

### BACKGROUND OF THE INVENTION

A network processor is a type of processor that is optimally designed especially for data packet forwarding, and is widely applied as a forwarding engine in network devices such as a router and a switch. Because the total number of code instructions of a network processor is much smaller than that of a general-purpose processor and the network processor has a high requirement for forwarding performance, and particularly for a throughput rate, in an operation period of most network processors, their code instructions are all stored in high-speed memories inside the processors. On a network device that uses a network processor as a forwarding engine, generally, forwarding performance of a specific service is reversely proportional to a sum of instruction cycles of the service executed in the network processor, and the longer the sum of the instruction cycles of the service executed in the network processor is, the lower its forwarding performance is. For example, it is assumed that in a forwarding procedure of each IPv4 unicast packet, 100 instructions need to be executed and each instruction consumes 1.2 clock cycles averagely, 120 clock cycles are consumed in total, and each MPLS packet needs to consume 240 clock cycles. Therefore, the network processor has a better performance in forwarding an IPv4 unicast packet than that in forwarding an MPLS packet.

Execution of one instruction by the network processor generally includes several operation steps such as instruction fetch, decoding, operation and output, where each step is implemented by different subunits in series in the network processor respectively. Currently many network processors have a pipeline design, which enables each subunit to work simultaneously to achieve such an effect that on a pipeline, when a first instruction is sent to an operation subunit, a second instruction is being decoded, and a third instruction is being fetched, so that consumed clock cycles may be saved. However, actually, program instructions are not executed in an order from beginning to end, and a judgment jump instruction is generally included. When the judgment jump instruction is executed, because whether to jump needs to be determined by a calculation result, and an address of a next instruction to be executed is not known before the calculation result is obtained, and instruction fetch and decoding cannot be performed in advance, and therefore, the pipeline is forced to be interrupted. Apparently, the more judgment jump instructions in a program are, the larger the number of interruptions in the pipeline is, and accordingly, the more clock cycles that are actually consumed are. Therefore, the more complex a service supported by the network device is, the longer an instruction cycle of a forwarding procedure is, and the lower forwarding performance is.

Services supported by the network device are generally diversified, and include an IPv4 unicast/multicast, an IPv6 unicast/multicast, MPLS, bridging, a PWE3, a VPLS, and so on. The network device forwards a packet from an ingress interface to an egress interface, and only makes a minimum modification which satisfies a protocol requirement to the packet, which is referred to as basic forwarding. To satisfy demands of a user in many aspects such as security, quality of service, reliability, maintainability, and manageability, processing performed by the network device is referred to as an additional feature. Different users may enable one or more additional features according to their own requirement, and any one of additional features is not indispensable to all users, otherwise it becomes a part of the basic forwarding. Therefore, the network device extracts the basic forwarding and a common procedure of various types of services as a main line procedure, and tries to maintain the total instruction execution cycles of the main line procedure as short as possible, otherwise, all users may be influenced. An additional feature of the network device is implemented by adding a judgment jump instruction in the main line procedure, which may reduce performance of the main line procedure, and then influence all users.

For example, it is assumed that on the basis of IPv4 unicast basic forwarding, three additional features, that is, simple traffic classification BA (Behavior Aggregation, behavior aggregation), complex traffic classification ACL (Access Control Lists, access control list), and URPF (Unicast Reverse Path Forwarding, unicast reverse path forwarding), are added to a router, three judgment jump instructions have to be added in the main line procedure to respectively judge whether BA is enabled, whether ACL is enabled, and whether URPF is enabled. No matter whether these three additional features are enabled, an instruction execution cycle exceeds an execution cycle before the judgment jump instructions are added. When they are all enabled, the execution cycle is the longest. It can be seen that, the judgment jump instructions extend the execution cycle of the main line procedure, and as new additional features are continuously added, a cumulative effect has more obvious influence on main line performance.

In the prior art, an additional feature of the network device is generally implemented in two manners: a non-function call manner and a function call manner. A processing process of the additional feature, judging an enable flag of the additional feature at a first instruction of each code segment, if the additional feature is enabled, executing this code segment, and if the additional feature is not enabled, jumping over this code segment. A processing process of the function call manner is: judging whether an additional feature is enabled starting from an enable flag of the first additional feature, if enabled, calling a processing function of the additional feature, and after finishing the processing or if not enabled, returning to a main line to continue to judge an enable flag of a next additional feature. By taking that three additional features BA, ACL, and URPF are added to the network device as an example, in no matter which foregoing manner, three judgment jump instructions are added in a main line procedure, and for a network processor that has pipeline design, a pipeline is interrupted three times.

US 6,851,046 B 1 discloses a system and a method for performing tenary branch instructions. Different approaches are provided for reducing the complexibility of the tenary branch instruction word. An instruction word includes four branch target addresses.

In a process of implementing the present invention, the inventor finds that the prior art has at least the following disadvantages: when a network device has an additional feature, a judgment jump instruction added in a main line procedure extends an instruction execution cycle, thereby reducing performance of the main line procedure.

### SUMMARY OF THE INVENTION

To solve problems in the prior art, embodiments of the present invention provide an instruction processing method of a network processor and a network processor. The technical solutions are as follows.

An instruction processing method of a network processor includes:
when the network processor executes a pre-added combined function call instruction, wherein the pre-added combined function call instruction is used to call a function corresponding to each additional feature, adding an address of a next instruction of the combined function call instruction to a stack top of a first stack, where the first stack is a preset stack used for calling the combined function, wherein the pre-added combined function call instruction includes an address of a first register that stores an enable flags of each additional feature and a number of the enable flags stored in the first register;
judging, according to the combined function call instruction, whether the enable flags of each additional feature of the network processor is enabled, and if an enable flag of an additional feature is enabled, adding a function entry address corresponding to the additional feature to the stack top of the first stack; and
after finishing judging enable flags of all additional features, popping the function entry address from the stack top, and executing a function corresponding to a popped function entry address until the address of the next instruction of the combined function call instruction is popped.

A network processor includes:
a first processing module, configured to, when the network processor executes a pre-added combined function call instruction, wherein the pre-added combined function call instruction is used to call a function corresponding to each additional feature, add an address of a next instruction of the combined function call instruction to a stack top of a first stack, wherein the pre-added combined function call instruction includes an address of a first register that stores enable flag of each additional feature and a number of the enable flag stored in the first register; and judge, according to the combined function call instruction, whether the enable flag of each additional feature of the network processor is enabled, and if an enable flag of an additional feature is enabled, add a function entry address corresponding to the additional feature to the stack top of the first stack, where the first stack is a preset stack used for calling the combined function; and
a second processing module, configured to, after finishing judging enable flags of all additional features, pop the function entry address from the stack top of the stack, and execute a function corresponding to a popped function entry address until the address of the next instruction of the combined function call instruction is popped.

In the technical solutions provided in the embodiments of the present invention, a combined function call instruction is added, and according to the combined function call instruction, a function entry address corresponding to an enabled additional feature is pushed, popped and called. Compared with the prior art, only one judgment jump instruction needs to be added to a main line procedure to implement function call of all enabled additional features, which greatly saves an instruction execution cycle, and reduces influence of an additional feature on main line performance, and furthermore, a random combination of multiple additional features may be supported, which is easy to be implemented and is flexible in application.

### BRIEF DESCRIPTION OF THE DRAWINGS

FIG. 1 is a flow chart of an instruction processing method of a network processor according to a first embodiment of the present invention;
FIG. 2 is a flow chart of an instruction processing method of a network processor according to a second embodiment of the present invention;
FIG. 3 is a schematic diagram of storing enable flags of three additional features by using a register according to the second embodiment of the present invention;
FIG. 4 is a schematic diagram of storing function entry addresses of three additional features by using a register according to the second embodiment of the present invention;
FIG. 5 is a schematic diagram of pushing a first stack when a combined function call instruction is executed according to the second embodiment of the present invention;
FIG. 6 is a schematic flow chart of combined function call according to the second embodiment of the present invention;
FIG. 7 is a structural diagram of a network processor according to a third embodiment of the present invention.
the present invention.

### DETAILED DESCRIPTION OF THE EMBODIMENTS

In order to make the objectives, technical solutions and advantages of the present invention clearer, the embodiments of the present invention are described in further detail in the following with reference to the accompanying drawings.

### Embodiment 1

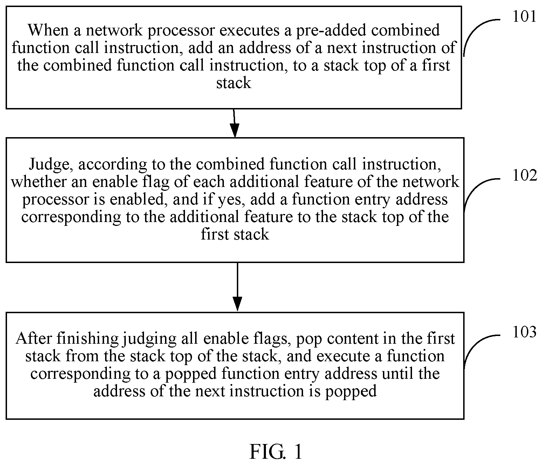

Referring to FIG. 1, this embodiment provides an instruction processing method of a network processor, which includes:
101: When the network processor executes a pre-added combined function call instruction, add an address of a next instruction of the combined function call instruction to a stack top of a first stack, where the first stack is a preset stack used for calling a combined function.
102: Judge, according to the combined function call instruction, whether an enable flag of each additional feature of the network processor is enabled, and if an enable flag of the additional feature is enabled, add a function entry address corresponding to the additional feature to the stack top of the first stack.
103: After finishing judging enable flags of all additional features, pop the function entry address from the stack top, where the function entry address is added to the first stack, and execute a function corresponding to a popped function entry address until the address of the next instruction of the combined function call instruction is popped.

With the foregoing method provided in this embodiment, a combined function call instruction is added, and according to the combined function call instruction, a function entry address corresponding to an enabled additional feature is pushed, popped and called. Compared with the prior art, only one jump instruction needs to be added to a main line procedure to implement function call of all additional features, which greatly saves an instruction execution cycle, and reduces influence of an additional feature on main line performance, and furthermore, a random combination of multiple additional features may be supported, which is easy to be implemented and is flexible in application.

### Embodiment 2

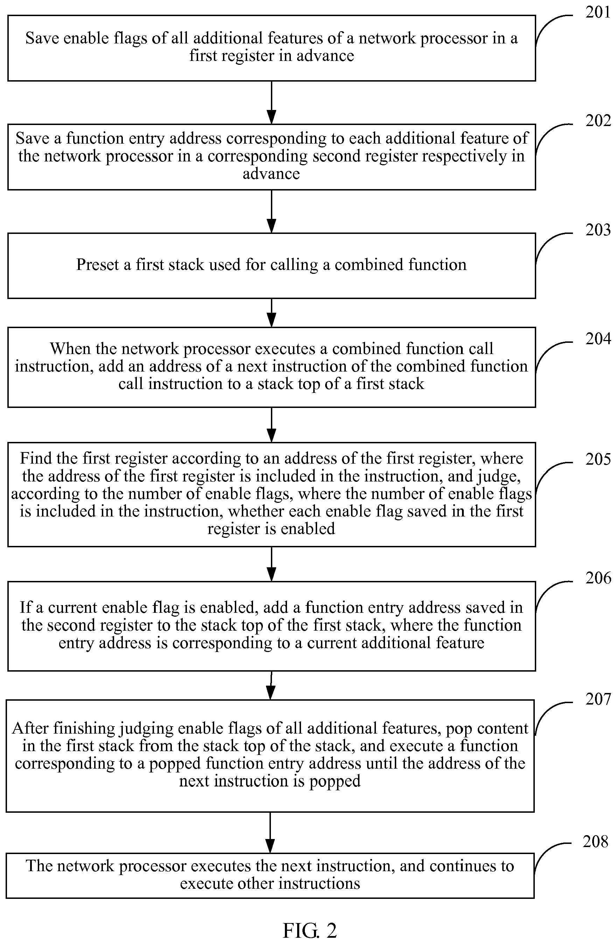

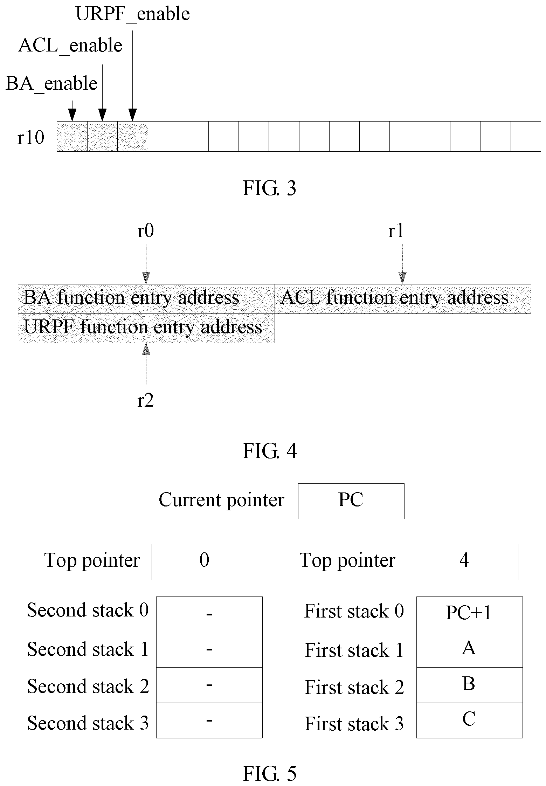

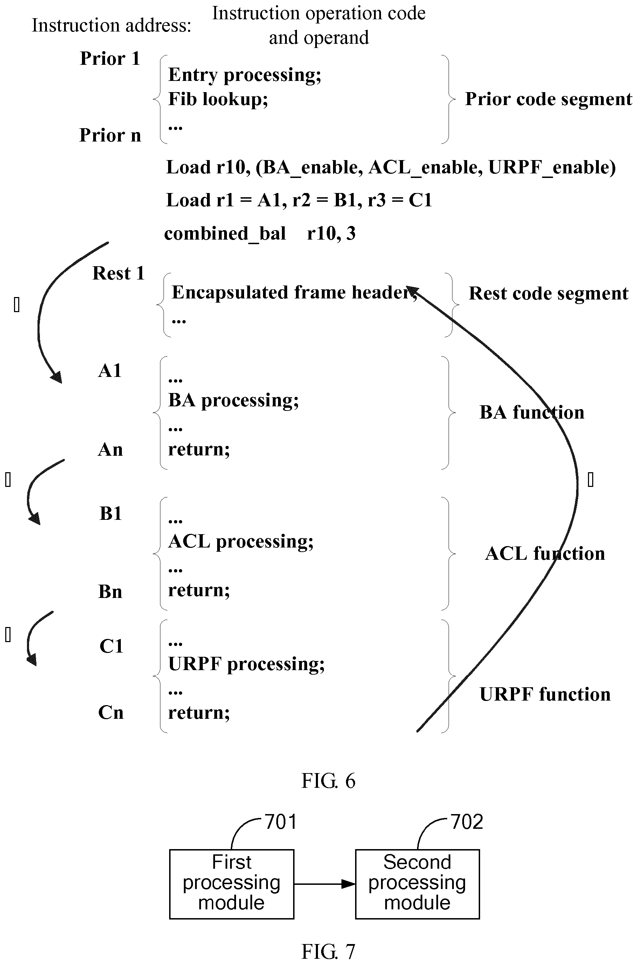

Referring to FIG. 2, this embodiment provides an instruction processing method of a network processor, which includes:
201: Store enable flags of all additional features of the network processor in a first register in advance.
   In this embodiment, the network processor may have one or multiple additional features, and generally have multiple additional features. When multiple additional features exist, they may be all enabled, or partially enabled, or all not enabled, which is not specifically limited in this embodiment of the present invention.
   An enable flag of an additional feature is generally a 1-bit flag bit, and it has two value ranges which represent enabled and disenabled respectively. For example, when a value is 1, it represents enabled, and when a value is 0, it represents disenabled. A specific value of the enable flag is not limited in this embodiment of the present invention.
   The first register in this embodiment may be a general-purpose register with a length of 32 bits. Enable flags of all additional features of the network processor are stored in the first register, and each enable flag occupies one bit, and the enable flags may be stored in an order from a high bit to a low bit, and may also be stored in an order from a low bit to a high bit. Furthermore, an enable flag of each additional feature may be sorted and then stored in the first register, and there are also many sorting manners, for example, an enable flag of an additional feature with a high priority precedes, which is not specifically limited in this embodiment of the present invention.
   For example, referring to FIG. 3, the network processor has three additional features which are BA, ACL and URPF respectively, and corresponding enable flags are BA_enable, ACL_enable, and uRPF_enable. The three enable flags are saved in sequence starting from an MSB (Most Significant Bit, most significant bit) in an r10 register.
202: Save a function entry address corresponding to each additional feature of the network processor in a corresponding second register respectively in advance.
   In this embodiment, each additional feature is corresponding to one function, each function has one function entry address, and a function entry address corresponding to each function is stored in a corresponding second register. In this embodiment, what the first register and the second register have in common is that both of them may be a general-purpose register with a length of 32 bits, while a difference is that the first register is configured to store an enable flag, and the second register is configured to store a function entry address.
   For example, referring to FIG. 4, function entry addresses of BA, ACL and uRPF are sequentially stored in r1, r2 and r3.
203: Preset a first stack used for calling a combined function.
   In this embodiment of the present invention, calling multiple functions in one instruction is referred to as combined function call, and function call other than the combined function call is referred to as non-combined function call, that is, existing ordinary function call.
   The first stack may specifically be a stack that is newly added on the basis of an original stack of the network processor, the original stack is referred to as a second stack, and the second stack is used for calling a non-combined function. In this embodiment, function call is classified into two types, which are pushed onto and popped from different stacks respectively. And in this embodiment, the combined function call uses the first stack, and the non-combined function call uses the second stack.
   In this embodiment, there is no fixed order between steps 201, 202 and 203, and they may also be performed concurrently.
204: When the network processor executes a pre-added combined function call instruction, push an address of a next instruction of the combined function call instruction onto a stack top of the first stack.
   The combined function call instruction is a pre-added new instruction, and is used to call a function corresponding to each additional feature. Specifically, the combined function call instruction may include an address of a register that stores enable flags, and the number of enable flags stored in the register.
   For example, the combined function call instruction is combined_bal condition_register, number_of_branches, where combined_bal is an operation code, and represents combined function call; condition_register is a first operand, and represents an address of a register that stores enable flags; and number_of_branches is a second operand, and represents the number of enable flags stored in the register. By taking the foregoing three additional features as an example, the combined function call instruction may be combined_bal r10, 3, which indicates that enable flags of the three additional features are all stored in an r10 register, and the number of enable flags stored in the r10 register is three.
   In this embodiment, the address of the next instruction of the combined function call instruction is added to the stack top of the first stack, in order that after the combined function call is ended, the network processor can return to the next instruction to continue execution.
205: Find the first register according to an address of the first register that stores enable flags, where the address of the first register is included in the combined function call instruction, and judge one by one, according to the number of enable flags, where the number of enable flags is included in the combined function call instruction, whether the enable flags stored in the first register are enabled.
   Specifically, a judgment process is a cyclic process, where judgment may be performed bit by bit starting from a high bit toward a low bit of the register, and definitely, the judgment may also be performed bit by bit starting from a low bit toward a high bit of the register. A direction of the judgment may be consistent with or different from a saving direction of the enable flags in the register. For example, if the enable flags are stored in the register in an order from a high bit to a low bit, the judgment may be performed in the same direction bit by bit in an order from a high bit to a low bit; and the judgment may also be performed in an opposite direction bit by bit in an order from a low bit to a high bit, which is not specifically limited in this embodiment of the present invention. Generally, when enable flags are stored in a register, storage is performed in a desired function execution order, and the desired function execution order is generally an order of priority levels of additional features. Therefore, the judgment is preferably performed in the same order, so as to ensure that if it is judged to be enabled, corresponding functions are executed in a desired order.
206: If a current enable flag is enabled, according to a current additional feature that is corresponding to the enable flag, determine a second register that is corresponding to a current additional feature, and add a function entry address saved in the second register to the stack top of the first stack, where the function entry address is corresponding to the current additional feature.
   In this embodiment, each time when content is added to the stack top of the first stack, a stack top pointer of the first stack is increased by 1.
   For example, if the three additional features BA, ACL and URPF of the network processor are all enabled, entry addresses corresponding to the three functions A, B and C are sequentially added to the stack top of the first stack, and each time, the stack top pointer of the first stack is increased by 1. Referring to FIG. 5, a current address of a combined function call instruction is PC, PC+1, A, B and C are pushed onto a first stack successively, and the stack top pointer changes to 4. A second stack in the figure is a stack used for calling a non-combined function, which is currently empty, and a stack top pointer is 0.
207: After finishing judging enable flags of all additional features, pop a function entry address from the stack top of the stack, where the function entry address is added to the first stack, and execute a function corresponding to a popped function entry address until the address of the foregoing next instruction is popped.
   In this embodiment, according to the stack top pointer and a last-in first-out feature of the stack, each function entry address saved in the first stack is sequentially popped from the top of the first stack, and a corresponding function is called according to the address, thereby implementing a corresponding additional feature. Each time when popping is performed, the stack top pointer is decreased by 1. After the address of the foregoing next instruction is popped, the network processor returns to the next instruction to continue the execution, thereby completing the combined function call.
   In this embodiment, both pushing and popping of a function entry address that is corresponding to each additional feature are implemented during an execution process of the combined function call instruction. Therefore, it can be seen that, calling of functions of all enabled additional features can be implemented by adding, in a program, only one new instruction, that is, a combined function call instruction, thereby greatly shortening an instruction execution cycle of the network processor. FIG. 6 is a schematic flow chart of combined function call. In the figure, functions corresponding to three additional features BA, ACL and URPF are a BA function, an ACL function, and a URPF function respectively, and their entry addresses are A1, B1, and C1 respectively and are stored in registers r1, r2 and r3 respectively. When the network processor executes a combined function call instruction combined_bal r10,3, steps ①, ②, ③ and ④ are performed sequentially in an order indicated by arrows in the figure. Step ① is: jumping to A1 to execute the BA function; step ② is: jumping to B1 to execute the ACL function; step ③ is: jumping to Cl to execute the URPF function; and step ④ is: jumping to Rest1 to execute rest code segments after the combined function call instruction.
208: The network processor executes the next instruction, and continues to execute other instructions, and a current combined function call process is ended. Execution of the next instruction and other instructions is an existing process, which is not further described here.

Further, the foregoing method may further include:
When the network processor executes a non-combined function call instruction, add an address of a next instruction of the non-combined function call instruction to a stack top of a second stack, where the second stack is a preset stack used for calling a non-combined function, and in this embodiment, the second stack is popped in preference to the first stack. The non-combined function call instruction may be located in front of or behind the foregoing combined function call instruction, which is not specifically limited in this embodiment of the present invention, but a combined function call instruction cannot exist between the non-combined function call instruction and its corresponding return statement. In addition, a function corresponding to the non-combined function call instruction may be a non-nested function, that is, an independent function, or may be a function nested in any function, that is, a sub-function of another function, where the another function may be any function, including a combined call function or a non-combined call function.

In this embodiment, a return statement of any function is set to a uniform format, for example, *return,* and the return statement is not distinguished by a call manner, so as to improve maintainability and manageability of a function. However, when a return statement of a function is executed, an operation is performed according to a principle that the second stack is popped in preference to the first stack. Therefore, in step 207, when an assembly instruction *return* that is returned by the function is executed, whether the second stack is empty is preferably checked. If the second stack is not empty, popping from the second stack is performed first. If the second stack is empty, whether the first stack is empty is further checked. If the first stack is not empty, popping from the first stack is performed. If the first stack is also empty, it indicates that an error occurs to a program that is currently executed, and a stack exception is reported.

In this embodiment, the combined function call instruction cannot be nested in any function call, and ordinary function call may be nested in any other function call, and in this way, organization and maintainability of the program in the network processor may be improved, and it is useful for the network processor to implement a router service. Therefore, before the combined function call instruction is executed, both the first stack and the second stack are required to be empty; while before an ordinary function call instruction is executed, whether the first stack and the second stack are empty is not required.

With the foregoing method provided in this embodiment, a combined function call instruction is added, and according to the combined function call instruction, a function entry address corresponding to an enabled additional feature is pushed, popped and called. Compared with the prior art where three times of judgment and jumping need to be added, only one judgment jump instruction needs to be added to a main line procedure to implement function call of all enabled additional features, which greatly saves an instruction execution cycle, reduces a judgment jump instruction that is of an additional feature and added to the main line procedure, and reduces influence of the additional feature on main line performance, and furthermore, a random combination of multiple additional features may be supported, which is easy to be implemented and is flexible in application.

### Embodiment 3

Referring to FIG. 7, this embodiment provides a network processor, which includes:
a first processing module 701, configured to, when the network processor executes a pre-added combined function call instruction, add an address of a next instruction of the combined function call instruction to a stack top of a first stack; and judge, according to the combined function call instruction, whether an enable flag of each additional feature of the network processor is enabled, and if an enable flag corresponding to the additional feature is enabled, add a function entry address corresponding to the additional feature to the stack top of the first stack, where the first stack is a preset stack used for calling combined function; and
a second processing module 702, configured to, after finishing judging enable flags of all additional features, pop the function entry address from the stack top of the stack, where the function entry address is added to the first stack, and execute a function corresponding to a popped function entry address until the address of the foregoing next instruction is popped.

The first stack may specifically be a stack that is newly added on the basis of an original stack of the network processor, the original stack is referred to as a second stack, and the second stack is used for calling a non-combined function call. In this embodiment, function call is classified into two types, which are pushed onto and popped from different stacks respectively, where combined function call uses the first stack, and non-combined function call uses the second stack.

In this embodiment, the foregoing network processor may further include:
a first initialization module, configured to store enable flags of all additional features of the network processor in a first register.

Accordingly, the first processing module includes:
a judging unit, configured to find the first register according to an address of the first register, where the address of the first register is included in the combined function call instruction, and judge, according to the number of enable flags, where the number of enable flags is included in the combined function call instruction, whether each enable flag saved in the first register is enabled.

In this embodiment, the foregoing network processor may further include:
a second initialization module, configured to save a function entry address corresponding to each additional feature of the network processor in a corresponding second register respectively.

Accordingly, the first processing module includes:
a push processing unit, configured to, if the enable flag of the additional feature is enabled, determine, according to the additional feature, a second register corresponding to the additional feature, and add a function entry address saved in the second register to the stack top of the first stack, where the function entry address is corresponding to the additional feature.

In this embodiment, the foregoing network processor may further include:
a third processing module, configured to, when the network processor executes a non-combined function call instruction, add an address of a next instruction of the non-combined function call instruction to a stack top of the second stack, where the second stack is a preset stack used for calling a non-combined function call, and the second stack is popped in preference to the first stack. A function corresponding to the non-combined function call instruction is a non-nested function, or is a function that is nested in any function.

All the foregoing modules and units in this embodiment may be accomplished through hardware, for example, adding a combined function call logic in the network processor to enable the network processor to have functions of all the foregoing modules and units; and in addition, may also be accomplished through a combination manner of hardware and software, for example, using a microinstruction to implement judgment of an enable flag, and adding a combined function call address corresponding to an enabled additional feature is pushed, popped and called. Compared with the prior art where three times of judgment and jumping need to be added, only one judgment jump instruction needs to be added to a main line procedure to implement function call of all enabled additional features, which greatly saves an instruction execution cycle, reduces a judgment jump instruction that is of an additional feature and added to the main line procedure, and reduces influence of the additional feature on main line performance, and furthermore, a random combination of multiple additional features may be supported, which is easy to be implemented and is flexible in application.

Finally, it should be noted that, persons of ordinary skill in the art may understand that all or a part of procedures in the methods according to the foregoing embodiments may be accomplished by a computer program instructing relevant hardware. The program may be stored in a computer-readable storage medium. When the program is executed, the procedures of each method according to the foregoing embodiments are performed. The storage medium may be a magnetic disk, an optical disk, a read-only memory (ROM), or a random access memory (RAM), and so on.

Each functional unit in the embodiments of the present invention may be integrated in one processing module, and may also exist as a separate physical unit, and two or more than two units may also be integrated in one module. The foregoing integrated module may be implemented in the form of hardware, and may also be implemented in the form of a software functional module. When the integrated module is implemented in the form of a software functional module and is sold or used as an independent product, the integrated module may also be stored in a computer readable storage medium. The foregoing storage medium may be a read-only memory, a magnetic disk, or an optical disk, and so on. Each foregoing apparatus or system may execute the method in the corresponding method embodiments.

The foregoing descriptions are merely exemplary embodiments of the present invention, but are not intended to limit the present invention. Any modification, equivalent replacement, or improvement made within the principle of the present invention should all fall within the protection scope of the present invention.

## Claims

1. An instruction processing method of a network processor, comprising:
when the network processor executes a combined function call instruction, wherein the combined function call instruction is used to call a function corresponding to each additional feature that has been enabled, adding (101) an address of a next instruction of the combined function call instruction to a stack top of a first stack, wherein the first stack is a preset stack used for calling the combined function, wherein the combined function call instruction includes an address of a first register that stores for each additional feature a corresponding enable flag that indicates whether the additional feature is enabled or not and a number of the enable flag stored in the first register;
judging (102), according to the combined function call instruction, whether the enable flag of each additional feature of the network processor is enabled, and if an enable flag of an additional feature is enabled, adding a function entry address corresponding to the additional feature to the stack top of the first stack; and
after finishing judging enable flags of all additional features, popping (103) the function entry address from the stack top of the stack, and executing a function corresponding to a popped function entry address until the address of the next instruction of the combined function call instruction is popped.

2. The method according to claim 1, wherein before the network processor executes the combined function call instruction, further comprising:
storing (201) enable flags of all additional features of the network processor in a first register; and
accordingly, the judging (102), according to the combined function call instruction, whether the enable flag of each additional feature of the network processor is enabled comprises:
finding (205) the first register according to the address of the first register, wherein the address of the first register is comprised in the combined function call instruction, and judging, according to the number of enable flags, wherein the number of the enable flags is comprised in the combined function call instruction, whether each enable flag saved in the first register is enabled.

3. The method according to claim 1, wherein before the network processor executes the combined function call instruction, further comprising:
saving a function entry address corresponding to each additional feature of the network processor in a corresponding second register respectively; and
accordingly, if the enable flag of the additional feature is enabled, adding the function entry address corresponding to the additional feature to the stack top of the first stack comprises:
if the enable flag of the additional feature is enabled, determining, according to the additional feature, a second register corresponding to the additional feature, and adding the function entry address saved in the second register to the stack top of the first stack, wherein the function entry address is corresponding to the additional feature.

4. The method according to claim 1, further comprising:
when the network processor executes an ordinary function call instruction, adding an address of a next instruction of the ordinary function call instruction to a stack top of a second stack;
wherein the second stack is a preset stack used for calling the ordinary function, and the second stack is popped in preference to the first stack including:
wherein the second stack is popped in preference to the first stack, comprising:
if the second stack is not empty, popping from the second stack is performed first; if the second stack is empty, further checking whether the first stack is empty, if the first stack is not empty, popping from the first stack is performed.

5. The method according to claim 4, wherein a function corresponding to the ordinary function call instruction is a non-nested function.

6. A network processor, comprising:
a first processing module (701), configured to, when the network processor executes a combined function call instruction, wherein the combined function call instruction is used to call a function corresponding to each additional feature that has been enabled, add an address of a next instruction of the combined function call instruction to a stack top of a first stack, wherein the combined function call instruction includes an address of a first register that stores for each additional feature a corresponding enable flag indicates whether the additional feature is enabled or not and a number of the enable flag stored in the first register; and judge, according to the combined function call instruction, whether the enable flag of each additional feature of the network processor is enabled, and if an enable flag of an additional feature is enabled, add a function entry address corresponding to the additional feature to the stack top of the first stack, wherein the first stack is a preset stack used for calling the combined function; and a second processing module (702), configured to, after finishing judging enable flags of all additional features, pop the function entry address from the stack top of the stack, and execute a function corresponding to a popped function entry address until the address of the next instruction of the combined function call instruction is popped.

7. The network processor according to claim 6, further comprising:
a first initialization module, configured to store enable flags of all additional features of the network processor in a first register; and
accordingly, the first processing module comprises:
a judging unit, configured to find the first register according to the address of the first register, wherein the address of the first register is comprised in the combined function call instruction, and judge, according to the number of enable flags, wherein the number of enable flags is comprised in the combined function call instruction, whether each enable flag saved in the first register is enabled.

8. The network processor according to claim 6, further comprising:
a second initialization module, configured to save a function entry address corresponding to each additional feature of the network processor in a corresponding second register respectively; and
accordingly, the first processing module comprises:
a push processing unit, configured to, if the enable flag of an additional feature is enabled, determine, according to the additional feature, a second register corresponding to the additional feature, and add the function entry address saved in the second register to the stack top of the first stack, wherein the function entry address is corresponding to the additional feature.

9. The network processor according to claim 6, further comprising:
a third processing module, configured to, when the network processor executes an ordinary function call instruction, add an address of a next instruction of the ordinary function call instruction to a stack top of a second stack, wherein the second stack is a preset stack used for calling the ordinary function, and the second stack is popped in preference to the first stack;
wherein the second stack is popped in preference to the first stack, comprising:
if the second stack is not empty, popping from the second stack is performed first; if the second stack is empty, whether the first stack is empty is further checked, if the first stack is not empty, popping from the first stack is performed.

10. The network processor according to claim 9, wherein a function corresponding to the ordinary function call instruction is a non-nested function.

## Patentansprüche

1. Anweisungsverarbeitungsverfahren eines Netzwerkprozessors, das die folgenden Schritte umfasst:
wenn der Netzwerkprozessor eine Kombinierte-Funktion-Aufrufanweisung ausführt, wobei die Kombinierte-Funktion-Aufrufanweisung verwendet wird zum Aufrufen einer Funktion, die jedem zusätzlichen Merkmal, das freigeschaltet wurde, entspricht, Hinzufügen (101) einer Adresse einer nächsten Anweisung der Kombinierte-Funktion-Aufrufanweisung zu einer Stapelspitze eines ersten Stapels, wobei der erste Stapel ein voreingestellter Stapel ist, der verwendet wird zum Aufrufen der kombinierten Funktion, wobei die Kombinierte-Funktion-Aufrufanweisung eine Adresse eines ersten Registers beinhaltet, das für jedes zusätzliche Merkmal ein entsprechendes Freischalt-Flag speichert, das anzeigt, ob das zusätzliche Merkmal freigeschaltet ist oder nicht, und eine Anzahl des in dem ersten Register gespeicherten Freischalt-Flags;
Beurteilen (102), gemäß der Kombinierte-Funktion-Aufrufanweisung, ob das Freischalt-Flag jedes zusätzlichen Merkmals des Netzwerkprozessors freigeschaltet ist, und, falls ein Freischalt-Flag eines zusätzlichen Merkmals freigeschaltet ist, Hinzufügen einer Funktionseintrittsadresse, die dem zusätzlichen Merkmal entspricht, zu der Stapelspitze des ersten Stapels; und
nach dem Abschließen des Beurteilens von Freischalt-Flags aller zusätzlichen Merkmale, Poppen (103) der Funktionseintrittsadresse von der Stapelspitze des Stapels und Ausführen einer Funktion, die einer gepoppten Funktionseintrittsadresse entspricht, bis die Adresse der nächsten Anweisung der Kombinierte-Funktion-Aufrufanweisung gepoppt wird.

2. Verfahren nach Anspruch 1, wobei das Verfahren, bevor der Netzwerkprozessor die Kombinierte-Funktion-Aufrufanweisung ausführt, ferner die folgenden Schritte umfasst:
Speichern (201) von Freischalt-Flags von allen zusätzlichen Merkmalen des Netzwerkprozessors in einem ersten Register; und
entsprechend, das Beurteilen (102), gemäß der Kombinierte-Funktion-Aufrufanweisung, ob das Freischalt-Flag jedes zusätzlichen Merkmals des Netzwerkprozessors freigeschaltet ist, Folgendes umfasst:
Auffinden (205) des ersten Registers gemäß der Adresse des ersten Registers, wobei die Adresse des ersten Registers in der Kombinierte-Funktion-Aufrufanweisung enthalten ist, und Beurteilen, gemäß der Anzahl der Freischalt-Flags, wobei die Anzahl der Freischalt-Flags in der Kombinierte-Funktion-Aufrufanweisung enthalten ist, ob jedes in dem ersten Register gesicherte Freischalt-Flag freigeschaltet ist.

3. Verfahren nach Anspruch 1, wobei das Verfahren, bevor der Netzwerkprozessor die Kombinierte-Funktion-Aufrufanweisung ausführt, ferner die folgenden Schritte umfasst:
Sichern einer Funktionseintrittsadresse, die jedem zusätzlichen Merkmal des Netzwerkprozessors entspricht, in jeweils einem entsprechenden zweiten Register; und
entsprechend, falls das Freischalt-Flag des zusätzlichen Merkmals freigeschaltet ist, Hinzufügen der Funktionseintrittsadresse, die dem zusätzlichen Merkmal entspricht, zur Stapelspitze des ersten Stapels, Folgendes umfasst:
falls das Freischalt-Flag des zusätzlichen Merkmals freigeschaltet ist, Bestimmen, gemäß dem zusätzlichen Merkmal, eines zweiten Registers, das dem zusätzlichen Merkmal entspricht, und Hinzufügen der Funktionseintrittsadresse, die in dem zweiten Register gesichert ist, zur Stapelspitze des ersten Stapels, wobei die Funktionseintrittsadresse dem zusätzlichen Merkmal entspricht.

4. Verfahren nach Anspruch 1, das ferner die folgenden Schritte umfasst:
wenn der Netzwerkprozessor eine Normal-Funktion-Aufrufanweisung ausführt, Hinzufügen einer Adresse einer nächsten Anweisung der Normal-Funktion-Aufrufanweisung zu einer Stapelspitze eines zweiten Stapels;
wobei der zweite Stapel ein voreingestellter Stapel ist, der verwendet wird zum Aufrufen der normalen Funktion, und der zweite Stapel gegenüber dem ersten Stapel bevorzugt gepoppt wird, was beinhaltet:
wobei das bevorzugte Poppen des zweiten Stapels gegenüber dem ersten Stapel Folgendes umfasst:
falls der zweite Stapel nicht leer ist, wird Poppen vom zweiten Stapel zuerst durchgeführt; falls der zweite Stapel leer ist, weiteres Prüfen, ob der erste Stapel leer ist, falls der erste Stapel nicht leer ist, wird Poppen vom ersten Stapel durchgeführt.

5. Verfahren nach Anspruch 4, wobei eine Funktion, die der Normal-Funktion-Aufrufanweisung entspricht, eine nicht verschachtelte Funktion ist.

6. Netzwerkprozessor, der Folgendes umfasst:
ein erstes Verarbeitungsmodul (701), das ausgelegt ist zum, wenn der Netzwerkprozessor eine Kombinierte-Funktion-Aufrufanweisung ausführt, wobei die Kombinierte-Funktion-Aufrufanweisung verwendet wird zum Aufrufen einer Funktion, die jedem zusätzlichen Merkmal, das freigeschaltet wurde, entspricht, Hinzufügen einer Adresse einer nächsten Anweisung der Kombinierte-Funktion-Aufrufanweisung zu einer Stapelspitze eines ersten Stapels, wobei die Kombinierte-Funktion-Aufrufanweisung eine Adresse eines ersten Registers beinhaltet, das für jedes zusätzliche Merkmal ein entsprechendes Freischalt-Flag speichert, das anzeigt, ob das zusätzliche Merkmal freigeschaltet ist oder nicht, und eine Anzahl des in dem ersten Register gespeicherten Freischalt-Flags; und zum Beurteilen, gemäß der Kombinierte-Funktion-Aufrufanweisung, ob das Freischalt-Flag jedes zusätzlichen Merkmals des Netzwerkprozessors freigeschaltet ist, und, falls ein Freischalt-Flag eines zusätzlichen Merkmals freigeschaltet ist, Hinzufügen einer Funktionseintrittsadresse, die dem zusätzlichen Merkmal entspricht, zu der Stapelspitze des ersten Stapels.
wobei der erste Stapel ein voreingestellter Stapel ist, der verwendet wird zum Aufrufen der kombinierten Funktion; und
ein zweites Verarbeitungsmodul (702), das ausgelegt ist zum, nach dem Abschließen des Beurteilens von Freischalt-Flags aller zusätzlichen Merkmale, Poppen der Funktionseintrittsadresse von der Stapelspitze des Stapels und Ausführen einer Funktion, die einer gepoppten Funktionseintrittsadresse entspricht, bis die Adresse der nächsten Anweisung der Kombinierte-Funktion-Aufrufanweisung gepoppt wird.

7. Netzwerkprozessor nach Anspruch 6, der ferner Folgendes umfasst:
ein erstes Initialisierungsmodul, das ausgelegt ist zum Speichern von Freischalt-Flags von allen zusätzlichen Merkmalen des Netzwerkprozessors in einem ersten Register; und
entsprechend, das erste Verarbeitungsmodul Folgendes umfasst:
eine Beurteilungseinheit, die ausgelegt ist zum Auffinden des ersten Registers gemäß der Adresse des ersten Registers, wobei die Adresse des ersten Registers in der Kombinierte-Funktion-Aufrufanweisung enthalten ist, und Beurteilen, gemäß der Anzahl der Freischalt-Flags, wobei die Anzahl der Freischalt-Flags in der Kombinierte-Funktion-Aufrufanweisung enthalten ist, ob jedes in dem ersten Register gesicherte Freischalt-Flag freigeschaltet ist.

8. Netzwerkprozessor nach Anspruch 6, der ferner Folgendes umfasst:
ein zweites Initialisierungsmodul, das ausgelegt ist zum Sichern einer Funktionseintrittsadresse, die jedem zusätzlichen Merkmal des Netzwerkprozessors entspricht, in jeweils einem entsprechenden zweiten Register; und
das erste Verarbeitungsmodul entsprechend Folgendes umfasst:
eine Push-Verarbeitungseinheit, die ausgelegt ist zum, falls das Freischalt-Flag eines zusätzlichen Merkmals freigeschaltet ist, Bestimmen, gemäß dem zusätzlichen Merkmal, eines zweiten Registers, das dem zusätzlichen Merkmal entspricht, und Hinzufügen der Funktionseintrittsadresse, die in dem zweiten Register gesichert ist, zur Stapelspitze des ersten Stapels, wobei die Funktionseintrittsadresse dem zusätzlichen Merkmal entspricht.

9. Netzwerkprozessor nach Anspruch 6, der ferner Folgendes umfasst:
ein drittes Verarbeitungsmodul, das ausgelegt ist zum, wenn der Netzwerkprozessor eine Normal-Funktion-Aufrufanweisung ausführt, Hinzufügen einer Adresse einer nächsten Anweisung der Normal-Funktion-Aufrufanweisung zu einer Stapelspitze eines zweiten Stapels, wobei der zweite Stapel ein voreingestellter Stapel ist, der verwendet wird zum Aufrufen der normalen Funktion, und der zweite Stapel gegenüber dem ersten Stapel bevorzugt gepoppt wird;
falls der zweite Stapel nicht leer ist, wird Poppen vom zweiten Stapel zuerst durchgeführt; falls der zweite Stapel leer ist, wird weiter geprüft, ob der erste Stapel leer ist, falls der erste Stapel nicht leer ist, wird Poppen vom ersten Stapel durchgeführt.

10. Netzwerkprozessor nach Anspruch 9, wobei eine Funktion, die der Normal-Funktion-Aufrufanweisung entspricht, eine nicht verschachtelte Funktion ist.

## Revendications

1. Procédé de traitement d'instructions d'un processeur de réseau, comprenant :
lorsque le processeur de réseau exécute une instruction d'appel de fonction combinée, l'instruction d'appel de fonction combinée étant utilisée pour appeler une fonction correspondant à chaque option additionnelle qui a été activée, ajouter (101) une adresse d'une instruction suivante de l'instruction d'appel de fonction combinée au sommet de pile d'une première pile, la première pile étant une pile prédéfinie utilisée pour appeler la fonction combinée, l'instruction d'appel de fonction combinée comportant une adresse d'un premier registre qui stocke pour chaque option additionnelle un drapeau d'activation correspondant qui indique si l'option additionnelle est activée ou non et un nombre des drapeaux d'activation stockés dans le premier registre ;
juger (102), selon l'instruction d'appel de fonction combinée, si le drapeau d'activation de chaque option additionnelle du processeur de réseau est activé, et si un drapeau d'activation d'une option additionnelle est activé, ajouter une adresse d'entrée de fonction correspondant à l'option additionnelle au sommet de pile de la première pile ; et
après avoir terminé de juger les drapeaux d'activation de toutes les options additionnelles, dépiler (103) l'adresse d'entrée de fonction à partir du sommet de pile de la pile, et exécuter une fonction correspondant à une adresse d'entrée de fonction dépilée jusqu'à ce que l'adresse de l'instruction suivante de l'instruction d'appel de fonction combinée soit dépilée.

2. Procédé selon la revendication 1, avant que le processeur réseau n'exécute l'instruction d'appel de fonction combinée, comprenant en outre :
stocker (201) les drapeaux d'activation de toutes les options additionnelles du processeur de réseau dans un premier registre ; et
en conséquence, l'étape consistant à juger (102), selon l'instruction d'appel de fonction combinée, si le drapeau d'activation de chaque option additionnelle du processeur de réseau est activé comprend :
trouver (205) le premier registre selon l'adresse du premier registre, l'adresse du premier registre étant comprise dans l'instruction d'appel de fonction combinée, et juger, selon le nombre de drapeaux d'activation, le nombre des drapeaux d'activation étant compris dans l'instruction d'appel de fonction combinée, si chaque drapeau d'activation sauvegardé dans le premier registre est activé.

3. Procédé selon la revendication 1, avant que le processeur de réseau n'exécute l'instruction d'appel de fonction combinée, comprenant en outre :
sauvegarder une adresse d'entrée de fonction correspondant à chaque option additionnelle du processeur de réseau dans un deuxième registre correspondant respectivement ; et
en conséquence, si le drapeau d'activation de l'option additionnelle est activé, l'étape consistant à ajouter l'adresse d'entrée de fonction correspondant à l'option additionnelle au sommet de pile de la première pile comprend :
si le drapeau d'activation de l'option additionnelle est activé, déterminer, selon l'option additionnelle, un deuxième registre correspondant à l'option additionnelle, et ajouter l'adresse d'entrée de fonction sauvegardée dans le deuxième registre au sommet de pile de la première pile, l'adresse d'entrée de fonction correspondant à l'option additionnelle.

4. Procédé selon la revendication 1, comprenant en outre :
lorsque le processeur de réseau exécute une instruction d'appel de fonction ordinaire, ajouter une adresse d'une instruction suivante de l'instruction d'appel de fonction ordinaire au sommet de pile d'une deuxième pile ;
la deuxième pile étant une pile prédéfinie utilisée pour appeler la fonction ordinaire, et la deuxième pile étant dépilée de préférence à la première pile comprenant :
la deuxième pile étant dépilée de préférence à la première pile, comprenant :
si la deuxième pile n'est pas vide, un dépilage à partir de la deuxième pile est exécuté en premier ; si la deuxième pile est vide, vérifier en outre si la première pile est vide, si la première pile n'est pas vide, un dépilage à partir de la première pile est exécuté.

5. Procédé selon la revendication 4, dans lequel une fonction correspondant à l'instruction d'appel de fonction ordinaire est une fonction non imbriquée.

6. Processeur de réseau, comprenant :
un premier module de traitement (701), configuré pour, lorsque le processeur de réseau exécute une instruction d'appel de fonction combinée, l'instruction d'appel de fonction combinée étant utilisée pour appeler une fonction correspondant à chaque option additionnelle qui a été activée, ajouter une adresse d'une instruction suivante de l'instruction d'appel de fonction combinée au sommet de pile d'une première pile, l'instruction d'appel de fonction combinée comportant une adresse d'un premier registre qui stocke pour chaque option additionnelle un drapeau d'activation correspondant indiquant si l'option additionnelle est activée ou non et un nombre des drapeaux d'activation stockés dans le premier registre ; et juger, selon l'instruction d'appel de fonction combinée, si le drapeau d'activation de chaque option additionnelle du processeur de réseau est activé, et si un drapeau d'activation d'une option additionnelle est activé, ajouter une adresse d'entrée de fonction correspondant à l'option additionnelle au sommet de pile de la première pile, la première pile étant une pile prédéfinie utilisée pour appeler la fonction combinée ; et
un deuxième module de traitement (702), configuré pour, après avoir terminé de juger les drapeaux d'activation de toutes les options additionnelles, dépiler l'adresse d'entrée de fonction à partir du sommet de pile de la pile, et exécuter une fonction correspondante à une adresse d'entrée de fonction dépilée jusqu'à ce que l'adresse de l'instruction suivante de l'instruction d'appel de fonction combinée soit dépilée.

7. Processeur de réseau selon la revendication 6, comprenant en outre :
un premier module d'initialisation, configuré pour stocker les drapeaux d'activation de toutes les options additionnelles du processeur de réseau dans un premier registre ; et
en conséquence, le premier module de traitement comprend :
une unité de jugement, configurée pour trouver le premier registre selon l'adresse du premier registre, l'adresse du premier registre étant comprise dans l'instruction d'appel de fonction combinée, et juger, selon le nombre de drapeaux d'activation, le nombre de drapeaux d'activation étant compris dans l'instruction d'appel de fonction combinée, si chaque drapeau d'activation sauvegardé dans le premier registre est activé.

8. Processeur de réseau selon la revendication 6, comprenant en outre :
un deuxième module d'initialisation, configuré pour sauvegarder une adresse d'entrée de fonction correspondant à chaque option additionnelle du processeur de réseau dans un deuxième registre correspondant respectivement ; et
en conséquence, le premier module de traitement comprend :
une unité de traitement de pousser, configurée pour, si le drapeau d'activation d'une option additionnelle est activé, déterminer, selon l'option additionnelle, un deuxième registre correspondant à l'option additionnelle, et ajouter l'adresse d'entrée de fonction sauvegardée dans le deuxième registre au sommet de pile de la première pile, l'adresse d'entrée de fonction correspondant à l'option additionnelle.

9. Processeur de réseau selon la revendication 6, comprenant en outre :
un troisième module de traitement, configuré pour, lorsque le processeur de réseau exécute une instruction d'appel de fonction ordinaire, ajouter une adresse d'une instruction suivante de l'instruction d'appel de fonction ordinaire au sommet de pile d'une deuxième pile, la deuxième pile étant une pile prédéfinie utilisée pour appeler la fonction ordinaire, et la deuxième pile étant dépilée de préférence à la première pile ;
la deuxième pile étant dépilée de préférence à la première pile, comprenant :
si la deuxième pile n'est pas vide, un dépilage à partir de la deuxième pile est exécuté en premier ; si la deuxième pile est vide, vérifier en outre si la première pile est vide, si la première pile n'est pas vide, un dépilage à partir de la première pile est exécuté.

10. Processeur de réseau selon la revendication 9, dans lequel une fonction correspondant à l'instruction d'appel de fonction ordinaire est une fonction non imbriquée.
